# EUROPEAN PATENT APPLICATION

(11) **EP 4 700 620 A1**
(43) Date of publication of application: **25.02.2026**
(21) Application number: 25196614.9
(22) Date of filing: 19.08.2025
(51) Int. Cl.: G06F 21/50, H04L 9/00, G06F 9/455, G06F 21/53, G06F 21/57

(54) **METHOD AND SYSTEM FOR IMPLEMENTING SOFTWARE TRUSTED PLATFORM MODULE FOR A VIRTUAL MACHINE**

(30) Priority: 19.08.2024 WO PCT/CN2024/113135; 26.09.2024 US 202418897022
(71) Applicant: INTEL Corporation, Santa Clara, CA 95054 (US)
(72) Inventor: SMITH, Ned M., Beaverton, 97006 (US); SCARLATA, Vincent R., Beaverton, 97006 (US); BEANEY Jr., James, Raleigh, 27612 (US); YAO, Jiewen, Shanghai, 200135 (CN)
(74) Representative: 2SPL Patentanwälte PartG mbB

(57) **Abstract**

A method and system for implementing software trusted platform module (swTPM) for a virtual machine (VM). A guest VM is set up in the system. A tenant trust domain (TTD) or a Software Guard Extension (SGX) enclave is also set up in the system, and a swTPM for the guest VM is executed within the TTD or the SGX enclave. The tenant workload and the guest VM may be measured, and the measurements may be extended into Platform Configuration Registers (PCRs) in the swTPM via a swTPM interface in the guest VM. TPM secrets may be stored in a secure storage in the SGX enclave. The TTD may take runtime measurements of the tenant workload, the guest VM, and/or the swTPM.

## Description

### Background

Workloads deployed in a virtual machine (VM) that require binary compatibility and use a Trusted Platform Module (TPM) for attestation rely on a virtual/software TPM (v/swTPM) that attests to a virtual/containerized environment as though it was not virtualized. The TPM platform configuration registers (PCRs) describe an environment that is potentially confusing to local and remote verifiers that expect to find traditional hardware (HW) TPM and physically hardened boot, such as a boot read-only memory (ROM), as a hardware root-of-trust (RoT).

Virtual TPM (vTPM) is provided by and rely on hypervisor in isolated execution environments that are hidden from the software running inside virtual machines to secure their code from the software in the virtual machines. Software TPM (swTPM) is a software emulator of TPMs. A v/swTPM approach enables a separate attestation evidence to stream for guest workloads on traditional VMs. Normally, a remote verifier correlates the legacy TPM produced evidence that is tied to a physical TPM. The VM evidence consists of both hwTPM evidence and vTPM evidence. The verifier must stitch these two representations of evidence together and verify that the two are indeed describing the same system.

Software (SW) and firmware (FW) update is another challenge facing containerized workloads hosted on virtualized environments. SW update invalidates attestation evidence. Frequent SW update places a burden on attestation processing infrastructure scalability. Normally, runtime SW updates require runtime update to TPM PCRs. While Trusted Computing Group (TCG) specifications describe runtime PCR update behavior, hardware TPM (hwTPM) scalability is limited by traditionally low-cost and low-power system on chips (SoCs). Occasionally, the TPM itself requires updating. Normally, such updates happen without attestation. The update goes unnoticed by the attestation verifier community (e.g., a trust authority) because the TPM is considered a "root" of trust, thereby declaring it implicitly trusted. This approach requires the verifier to have deep knowledge of the host platform manufacturing processes that are often difficult to coordinate with downstream users.

### Brief description of the Figures

Some examples of apparatuses and/or methods will be described in the following by way of example only, and with reference to the accompanying figures, in which
FIG. 1 is a block diagram of an example system for implementing swTPM for a VM using Confidential Computing root of trust (RoT);
FIG. 2 shows guest virtual machine hardening of software Trusted Platform Module (swTPM) using Trusted Domain Extension (TDX) in accordance with one example;
FIG. 3 shows seamless update runtime measurement collection including swTPM in accordance with one example;
FIG. 4 shows an example swTPM Root of Trust architecture;
FIG. 5 shows example layer hardening with alternative layering using inner virtual machine (VM);
FIG. 6 shows example of guest VM hardening of swTPM using Software Guard Extension (SGX);
FIG. 7 shows a Trust Domain (TD) with swTPM protected by SGX in accordance with one example;
FIG. 8 is a flow diagram of an example process for implementing swTPM for a VM;
FIG. 9 is a block diagram of an electronic apparatus incorporating at least one electronic assembly and/or method described herein;
FIG. 10 illustrates a computing device in accordance with one implementation of the invention; and
FIG. 11 is included to show an example of a higher-level device application for the disclosed embodiments.

### Detailed Description

Various examples will now be described more fully with reference to the accompanying drawings in which some examples are illustrated. In the figures, the thicknesses of lines, layers and/or regions may be exaggerated for clarity.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

It will be understood that when an element is referred to as being "connected" or "coupled" to another element, the elements may be directly connected or coupled or via one or more intervening elements. If two elements A and B are combined using an "or", this is to be understood to disclose all possible combinations, i.e. only A, only B as well as A and B. An alternative wording for the same combinations is "at least one of A and B". The same applies for combinations of more than 2 elements.

The terminology used herein for the purpose of describing particular examples is not intended to be limiting for further examples. Whenever a singular form such as "a," "an" and "the" is used and using only a single element is neither explicitly or implicitly defined as being mandatory, further examples may also use plural elements to implement the same functionality. Likewise, when a functionality is subsequently described as being implemented using multiple elements, further examples may implement the same functionality using a single element or processing entity. It will be further understood that the terms "comprises," "comprising," "includes" and/or "including," when used, specify the presence of the stated features, integers, steps, operations, processes, acts, elements and/or components, but do not preclude the presence or addition of one or more other features, integers, steps, operations, processes, acts, elements, components and/or any group thereof.

Unless otherwise defined, all terms (including technical and scientific terms) are used herein in their ordinary meaning of the art to which the examples belong.

In the following description, specific details are set forth, but examples of the technologies described herein may be practiced without these specific details. Well-known circuits, structures, and techniques have not been shown in detail to avoid obscuring an understanding of this description. "An example," "various examples," "some examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform or resource, even though the instructions contained in the software or firmware are not actively being executed by the system, device, platform, or resource.

The description may use the phrases "in an example," "in examples," "in some examples," and/or "in various examples," each of which may refer to one or more of the same or different examples. Furthermore, the terms "comprising," "including," "having," and the like, as used with respect to examples of the present disclosure, are synonymous.

In a swTPM/vTPM configuration, the TPM software may change frequently if deployed in cloud environments as cloud operators seek to optimize performance and scalability. Cloud operators also perform frequent workload migrations that involve migrating swTPM/vTPM protected data. However, since the TPM is considered a root-of-trust, modifications to swTPM/vTPM deployments goes unnoticed. This results in a large gap in attestation evidence and trust appraisals.

A hwTPM may be used to protect guest VMs. However, it requires hardware partitioning in the TPM. TPM2 has limited partitioning ability and does not scale in terms of performance and capacity. A software TPM may be implemented as a VM guest to address performance and scale up. However, TPM2 architecture limits resource partitioning. An alternative approach may utilize multiple swTPMs in one or more guest VMs. However, VM isolation is arguably not strong enough for TPM needs. In either case, the virtualized workload is unable to attest using a HW root-of-trust.

Example schemes are disclosed herein for implementing swTPM for (binary compatible) VMs using Trust Domain Extension (TDX) and/or Software Guard Extension (SGX) as root of trust. In examples disclosed herein, TDX, SGX, and virtualization technologies (VTX) are used to harden environments suitable for a swTPM. These technologies may be used separately or combined in various ways to achieve the hardening goal without requiring a hardware TPM (hwTPM).

TDX is an architectural technology to deploy hardware-isolated virtual machines (VMs) called trust domains (TDs). A TD is a hardware-isolated VM-based trusted execution environment (TEE). TDX is a set of hardware-based security features to provide robust isolation and protection for sensitive data and code within a TD. TDX enhances the security of virtualized environments by creating secure execution environments that are isolated from the rest of the system, including the hypervisor and other operating system components. TDs may be created by TDX. TDs are secure, isolated environments where sensitive workloads can be executed. TDs are designed to be protected from any unauthorized access or modification, including by the hypervisor or operating system. TDX utilizes hardware mechanisms to ensure that data and code within a TD are isolated from other parts of the system. This prevents even privileged software, like the hypervisor, from accessing the TD's contents. TDX employs memory encryption to protect data in use within a TD. This ensures that the data cannot be read or altered by any external entity while it resides in memory. TDX supports secure boot processes to ensure that only authenticated and verified code is executed within a TD. TDX attestation mechanisms allow for the verification of the integrity and authenticity of a TD before sensitive operations are performed.

A TD is created and initialized with a specific configuration, including memory regions and cryptographic keys, all managed by hardware. Once initialized, a TD operates in isolation, with the TDX hardware ensuring that all interactions with the TD are secure. The hypervisor cannot access or modify the TD's contents. Before sensitive operations commence, a TD can provide an attestation report to external parties to prove that it is operating in a secure and authenticated state. When a TD is no longer needed, it can be securely terminated, ensuring that all sensitive data is deleted.

SGX is a set of security-related instruction codes that are built into processors. SGX allows applications to create isolated and secure regions of memory known as enclaves. An SGX enclave is a separated and encrypted region for code and data created by SGX. The enclaves are designed to protect sensitive data and code from being accessed or tampered with by other processes, including the operating system and hypervisors. Enclaves are secure regions of memory that provide a protected execution environment for sensitive code and data. The enclaves are isolated from the rest of the system, preventing unauthorized access. Enclaves are created by applications and are managed by the processor with minimal involvement from the operating system.

SGX leverages hardware-based mechanisms to ensure the integrity and confidentiality of the data within enclaves. This includes encrypting the contents of the enclave in memory to protect against physical attacks. SGX supports both local and remote attestation, which allows an enclave to prove its identity and the integrity of its code to another party. This is useful for verifying that the enclave is running the expected software without any tampering. SGX supports sealing which is the process of encrypting data so that it can be securely stored outside the enclave (e.g., on disk) and later unsealed only by the same enclave or an enclave with the same sealing key. The memory used by enclaves is encrypted with keys managed by the processor. This ensures that even if an attacker has physical access to the system's memory, they cannot read or alter the contents of the enclave.

VTX is a set of hardware enhancements for processors that improve the efficiency and performance of VM environments. VTX facilitates virtualization by allowing a single processor to run multiple operating systems simultaneously and more efficiently. VTX provides a set of instructions and features that assist in creating and managing VMs, reducing the overhead typically associated with software-based virtualization. Some of the features of VTX are as follows. Virtual Machine Extensions (VMX), which is the core component of VTX, includes two primary modes: VMX root mode (for the hypervisor) and VMX non-root mode (for guest VMs). These modes help the processor distinguish between the hypervisor and guest VMs, allowing for more efficient execution of virtualized workloads. VTX supports VM entries and exits, which are transitions between the VMX root mode and VMX non-root mode. This mechanism allows the processor to switch between the hypervisor and guest VM contexts efficiently. Extended Page Tables (EPT) is a memory management feature that provides hardware-assisted memory virtualization. It allows the hypervisor to maintain separate page tables for each guest VM, improving performance by reducing the need for frequent context switches and memory translations.

In example schemes disclosed herein, swTPM is implemented for a VM using Confidential Computing root of trust (RoT). The examples use the TDX root-of-trust and/or confidential compute layers that are common across virtual and confidential compute environments. The evidence produced shows clear linkage between the guest or Confidential Computing environment to a common RoT. Evidence uses industry standards for evidence, reference values and manifests that any verifier can recognize (e.g., Trust Authority).

In examples, a remote attestation verifier can produce simple attestation reports for legacy workloads hosted on VMs without requiring modifications to the legacy attestation stream, while still processing attestation evidence for the vTPM's HW RoT. The verifier may rely on an industry standard Reference Integrity Manifest (RIM) format, such as IETF Concise Reference Integrity Manifest (CoRIM), that supplies an endorsement record associating the otherwise disparate attestation evidence streams.

In accordance with example schemes disclosed herein, Confidential Computing technology becomes the hardware root of trust for virtualized workloads without major impact to attestation evidence workstreams. Legacy virtualized workloads built to legacy TPM application programming interfaces (APIs) continue to function without recompiling but get a significant improvement in security and hardening. Legacy virtualized workloads continue to scale (as compared to vTPM solution) and scale better as compared to hwTPM solutions.

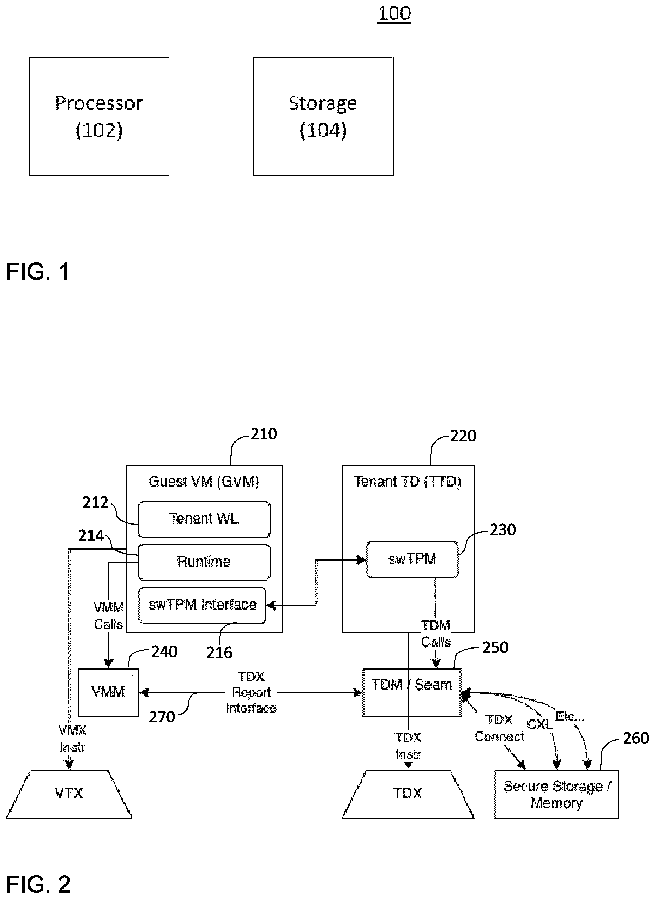

FIG. 1 is a block diagram of an example system for implementing swTPM for a VM using Confidential Computing RoT. In examples, the TDX and/or SGX technologies are used as a HW root-of-trust to implement a swTPM that takes the place of both boot ROM and hwTPM for virtualized environments. The system 100 includes a processor 102 and a storage 104. The system 100 is configured to support creation and operation of one or more VMs, one or more trust domains (TDs) by TDX, and one or more SGX enclaves by SGX. A VM is a software-based emulation of a physical computer that provides all the functions expected of the emulated computer. The software components of a VM run on a physical host, which can support the creation and operation of multiple VMs. The system 100 is configured to set up a guest VM and may deploy a tenant workload in the guest VM. The system 100 is further configured to set up a tenant trust domain (TTD) or an SGX enclave. The TTD is an isolated and secure execution environment created by TDX and the SGX enclave is a separated and encrypted region for code and data created by SGX. The system 100 is configured to execute swTPM for the guest VM within the TTD or the SGX enclave. swTPM is a software-based implementation of TPM features without relying on any physical hardware or hypervisor. swTPM can be used in situations where a physical TPM is not available. swTPM provides TPM functionalities (e.g., key generation, secure storage, attestation, etc.) through software. The swTPM may be exposed to the guest VM via a swTPM interface in the guest VM.

The tenant workload and runtime objects, etc. in the guest VM are measured into the swTPM using the conventional TPM trusted boot/attestation. The measurements of the tenant workload and the guest VM are extended into the TPM PCRs as usual through TCG software stack (TSS) application programming interfaces (APIs) that are linked to a swTPM interface located within the guest VM. The swTPM interface is a TPM command interface that connects to the TTD containing the swTPM.

TPM requires access to a secure storage to protect non-volatile secrets. In examples, TPM secrets (such as cryptographic keys, passwords, and other sensitive data that need to be managed and stored securely within the TPM) may be stored in a secure storage in the SGX enclave. SGX may be used to implement a secure non-volatile storage where a secure seed is provisioned and used to generate a wrapping key that can be used to wrap the TPM secrets. The SGX enclave may include a key wrapping key that is used to protect non-volatile swTPM objects or secrets.

In some examples, the TTD may be set up with the guest VM such that the TTD takes a runtime measurement of the tenant workload, the guest VM, and/or the swTPM.

In some examples, the TTD may contain a swTPM boot code that loads, links, or initializes the swTPM in response to a reset signal. The swTPM boot code may signal a trust domain module (TDM) and a quoting trust domain (QTD) to obtain runtime measurements of the swTPM and the swTPM boot code and verify a security status of the swTPM and the swTPM boot code.

In some examples, nested virtualization may be implemented. The TTD may include an inner VM nested in the TTD and the swTPM may be executed in the inner VM. The inner VM may be provided with a seed value used to generate a key wrapping key that is used to protect non-volatile swTPM objects or secrets.

FIG. 2 shows guest VM hardening of swTPM using TDX in accordance with one example. A guest VM 210 is set up in the system and a tenant workload 212 is deployed in the guest VM 210. A TTD 220 is set up in the system. The TTD 220 is a secure computing environment enabled by TDX. In examples, a swTPM 230 is executed for the guest VM 210 within the TTD 220.

The TDX architecture separates the VM side from the TD side. The hypervisor is cleaved into two parts: the virtual machine monitor (VMM) 240 and the TD module (TDM) 250 which is also known as the SEAM. The VMM 240 is configured to manage the creation and operation of virtualized environments (i.e., VMs) from the host system. The TDM 250 is a component or subsystem that is designed to manage and enforce the trust relationships between different entities or components in the system. The TDM 250 is configured to establish, monitor, and maintain the integrity, confidentiality, and authenticity of the interactions and data within the trust domain. The TDM 250 is not exposed to VMs. The TDM 250 enables TDX. The TDM 250 (software module) runs in a CPU secure arbitration mode (seam) as a peer VMM and supports TD entry and exit using the virtualization infrastructure.

The tenant Trusted Execution Environment (TEE)/guest VM 210 contains a workload 212, such as a Kubernetes pod manager and containers. The tenant WL (TWL) 212 may operate as traditional container in a virtualized guest. Operations that require VMM interfaces for traditional TWL operations behave as normal except that the vTPM commands are routed to the swTPM 230 in the TTD 220. This enables the swTPM 230 to be attested using TDX attestation capabilities.

The TWL 212 and runtime objects 214, etc. in the guest VM 210 are measured into the swTPM 230 using the conventional TPM trusted boot/attestation. The measurements of the TWL and the guest VM are extended into the TPM PCRs as usual through TSS APIs that are linked to a swTPM interface 216 located within the guest VM 210. The swTPM interface 216 is a TPM command interface that connects to the TTD 220 containing the swTPM 230.

Conventionally, the swTPM exists in a guest VM as a sidecar VM to the guest VM. In the examples disclosed herein, the swTPM 230 is executed in the TTD 220 and protected by the TTD 220. The TTD 220 supplies a security boundary that logically aligns with the physical TPM boundary. Secrets and integrity protected values, such as storage keys, are protected using a secure storage 260 accessible via TDX Connect, compute express link (CXL), or other interfaces. Measurements of the TWL may be obtained at the TWL load time and protected in the swTPM due to TDX security boundary protections.

TPMs require access to a secure storage to protect non-volatile secrets (TPM secrets such as encryption keys). In a hwTPM, the dedicated system on chip (SoC) contains non-volatile memory/storage. In some examples disclosed herein, as an alternative, SGX may be used to implement secure non-volatile storage where a secure seed is provisioned and used to generate a wrapping key that can be used to wrap the TPM secrets.

The TWL and other components in the guest VM or the TTD including the swTPM may be seamlessly updated during its operation. Seamless update means that the TWL 212 or any other components currently running may differ from what was loaded. Consequently, a more recent measurement (called runtime measurements) is needed. TDX is designed to take runtime measurements of TD images. Therefore, by integrating the TTD 220 with the guest VM 210 as shown in FIG. 2, it is possible for the TTD 220 to take/obtain runtime measurements of the TWL 212 and any components of the guest VM 210 or the TTD 220. The TDM 250 and the VMM 240 cooperate to expose the TDX report interface 270 through the VMM 240 so that TWL and runtime objects can request TD reports in similar fashion to the way TDX TDs can request TD Reports. The software modules that are binary compatible with the TPM interface may rely on the swTPM interface 216 to store measurements and to collect attestation reports (evidence).

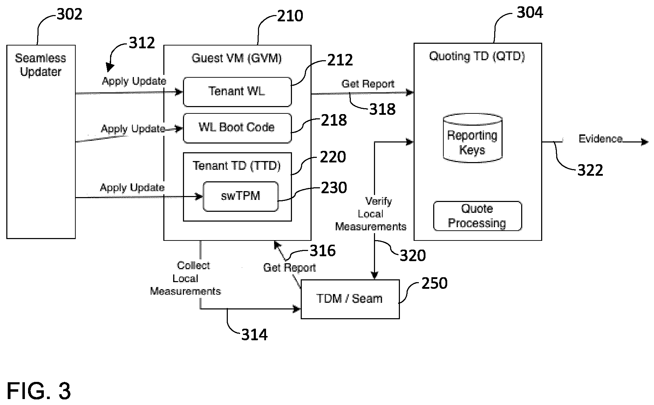

FIG. 3 shows seamless update runtime measurement collection including swTPM in accordance with one example. A seamless updater 302 may notify the guest VM 210 or the TTD 220 of a pending update (312). For example, the notification of update may be for the tenant WL 212 or the workload boot code 218 in the guest VM 210, or the swTPM 230 in the TTD 220. This notice may trigger collection of runtime measurements immediately. Additionally, upon completion of the update, another runtime measurement may also be collected.

The measurements (e.g., measurements of the tenant WL 212, the WL boot code 218, or the swTPM 230, etc.) are collected by the TDM 250 (314). These measurements include cryptographic hashes of the code, configuration, and other relevant information. The TDM 250 may request the TTD 220 to send the measurements (TD reports) to a QTD 320 (316). The TTD 220 sends the measurements to the QTD (318). The QTD 320 receives the measurements and verifies the measurements with the TDM 250 (320) and generates a cryptographic quote (evidence) and sends the quote (evidence) to a verifier (e.g., a third-party verifier) (322). A QTD is a specialized TD responsible for generating cryptographic attestations of other TDs. The primary function of a QTD is performing attestation for other TDs. The QTD generates cryptographic quotes, which are verifiable proofs of the integrity, identity, and state of other TDs. The quote includes the measurements and is signed using a private key that is securely managed by the QTD. The signed quote serves as proof that the measurements were taken from a legitimate TD and that the TD's state is as reported. A verifier (e.g., a third-party verifier) can verify the quote using the corresponding public key. This verification process ensures that the guest VM 210 and the TTD 220 is genuine and has not been tampered with.

The QTD 320 may maintain a record of all runtime measurements taken over the lifetime of the tenant. This enables an attestation verifier the ability to evaluate if any component of the guest VM 210 and the TTD 220 (e.g., swTPM) has ever been updated with code containing vulnerabilities. In this example shown in FIG. 3, both the TWL 212 and WL boot code 218 are components of the guest VM 210. The TDM 250 may collect a set of measurements from the guest VM 210 via the TDX report interface 270, which is shown in FIG. 2. As an example, the first report/measurement may be taken at boot time, the second report/measurement may be taken just prior to seamless update, and the third report/measurement may be taken just following the seamless update. These reports/measurements may be represented in an array of TD reports. The QTD 320 may obtain a TD report in an industry standard format, such as a CBOR Web Token (CWT), for each measurement collected locally. An industry standard data structure, for example Conceptual Message Wrapper (CMW), may be used to represent this history.

Trust in the swTPM may be appraised by using a root-of-trust (RoT) to measure the swTPM. In some examples, the RoT may be Device Identifier Composition Engine (DICE) RoT. DICE is a security framework that provides a robust, scalable, and hardware-based method for generating unique device identities and cryptographic keys. DICE enhances device security by ensuring that each device has a unique identity and that changes in firmware or software can be detected and responded to. DICE is a hardware RoT used to protect the devices and components. The DICE Unique Device Secret (UDS) is a fundamental component of the DICE architecture.

The UDS is a unique, immutable secret value embedded in each device during manufacturing. The UDS serves as the root cryptographic secret for the device's identity and key derivation processes. The UDS is used to generate cryptographic keys and unique device identities. The UDS ensures that each device has a unique basis for all security operations. During manufacturing, a unique UDS is embedded into each device. This process is done securely to ensure that the UDS cannot be extracted or modified after manufacturing. The UDS is stored in a secure area of the device, often in hardware security modules or secure enclave hardware.

At boot time, the UDS may be combined with measurements of the device's firmware or software to generate a Compound Device Identifier (CDI). The measurement may be a cryptographic hash and the CDI represents the unique combination of the UDS and the current firmware/software state. This ensures that any change in the firmware/software will result in a different CDI, detecting tampering or unauthorized modifications. As the boot process continues, each stage (e.g., bootloader, operating system, etc.) can use the CDI from the previous stage to generate new CDIs. This layering ensures that each component of the device's software stack can have its own unique identity derived from the UDS.

A VMM RoT architecture may rely on a hwTPM and a hardware boot ROM as its RoT. A TD RoT architecture may rely on a DICE UDS in a CPU complex and CPU firmware that bootstraps and measures the CPU complex resulting in a DICE RoT with one or more DICE layers. A conventional DICE RoT may have a single UDS, while a TDX RoT may have multiple RoTs. In examples, DICE layers may be used to load and measure the swTPM software.

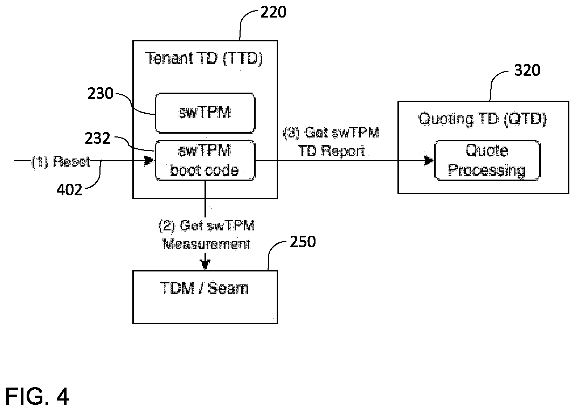

FIG. 4 shows an example of swTPM measurements. The TTD 220 containing a swTPM 230 may have a swTPM boot code 232. The swTPM boot code 232 may, in response to a reset signal 402, load, link, or otherwise initialize the swTPM code. In addition, the swTPM boot code 232 may signal the TDM 250 and the QTD 320 to obtain runtime measurements of the swTPM 230 and the swTPM boot code 232. The TTD 220 generates measurements and sends the measurements to the TDM 250 and the QTD 320. The swTPM boot code 232 requests the QTD 320 to generate a quote based on the measurements. The QTD 320 generates a quote (evidence) and sends it to a verifier. The QTD evidence may be formatted as an industry standard CWT. This CWT may be included with other CWTs in an array of CMWs, such that a generic attestation verifier may process the evidence block.

In response to an attestation request, the guest VM or the TTD may assemble an industry standard evidence block that contains industry standard evidence for each object in the guest VM or the TTD, respectively. Additionally, quotes taken at different points in time during the full lifecycle of the workload may also be included in the evidence block that can be processed by generic verifiers or relying parties.

The attestation verifier can fully appraise all components of the workload according to the reported evidence and evaluate it against industry standard reference manifests it obtains from the various suppliers involved in building the guest VM container. The only trusted component not appraised in this manner is the TDX uCode/xuCode that implements the TDX RoT. However, these can be described using TCG DICE defined standards for RoT.

Existing workloads that were compiled with TSS/TPM APIs do not need recompilation. Attestation verifiers, such as Trust Authority service, do not require modification (after initial work to support cited industry standards and possibly others) other than to obtain reference manifests, endorsements and to collect evidence produced by a QTD.

In some examples, nested virtualization may be implemented. Nested virtualization is a feature that allows running a hypervisor inside a VM. Nested virtualization can be used for running applications or emulators in a nested VM, testing software releases on VMs, etc. Hypervisor with nested virtualization enabled can expose the hardware virtualization extensions to its VMs. With nesting enabled, a guest VM can install its own hypervisor and run its own guest VMs.

TDX TD partitioning architecture further provides the ability to support an unmodified VM as a TD, thus providing the ability to lift and shift workloads into hardware-isolated VMs (i.e., trust domains (TDs)) without having to make any changes to the guest operating system (OS). TD partitioning extends the TDX architecture by allowing a TD to contain multiple VMs. This allows a TDX-enabled layer 1 VM (primary VM) to run as L1 VMM and a host-nested unmodified VM (layer 2 VM) on top of it.

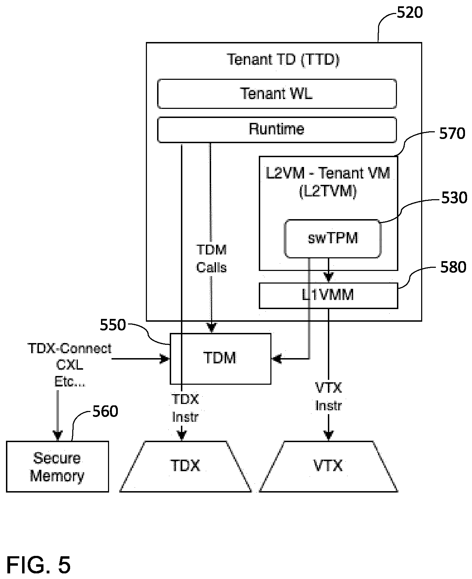

FIG. 5 shows layer hardening of a swTPM using virtualization technology (e.g., VTX). In FIG. 5, the swTPM 530 is isolated within a layer 2 VM (L2VM) 570 (inner VM) contained within a TDX hardened trust domain (TD) 520. In the example of FIG. 5, the TTD 520 contains an L1VMM 580 and an L2VM 570 which contains the swTPM 230. The swTPM 530 may access secure storage/memory (indirectly) via the TDM 550 through the L1VMM 580. The L2VM 570 may access the TDM 550 via the L1VMM 580, which allows access to secure storage 560 or securely connected devices or memory via TDX-Connect, CXL, etc. Attestation of the swTPM 530 is achieved using TDX attestation capabilities as the L1VMM 580 and the L2VM 570 are objects within the TTD 520 that are measured as they are loaded into the TTD 520. TWL and runtimes that expect binary compatible access to a TPM continue to function as expected. Verifiers that are configured for processing legacy TPM evidence also continue to function normally.

In a scenario depicted in FIG. 5, the L2VM 570 may be provisioned with a seed value used to generate key wrapping keys. The key wrapping keys may be used to protect non-volatile swTPM objects (e.g., storage keys) by encrypting the swTPM objects using a key wrapping key. For example, the seed value for the L2VM 570 may be generated by generating a DICE Trusted Component Identifier (TCI) and DICE CDI where the TCI is a measurement of the swTPM, or some subset of the swTPM forming a swTPM layer, and the CDI is a secret seed derived from the TCI and UDS. The CDI may be used as the seed for the L2VM 570. For example, the TDM 550 may perform the CDI_{swTPM} seed generation and provision it to the L2VM 570 for use by the swTPM 530. The TDX hardware may contain a UDS value that acts as a DICE RoT, and the TDM 550, the L1VMM 580, and the L2VM 570 may act as DICE layers. In some examples, the TDM 550 may also provision a CDI to a secure storage 560 or other device and the secure storage 560 or other device may use the CDI provided by the TDM 550 to generate keys to be used to protect content over a secure storage/device interface. The secure memory or other device may itself have a DICE RoT and CDI_{DEVICE} seeds, and the CDI_{DEVICE} seeds may be used with the TDM-originated CDI_{TDM-swTPM} (the CDI provided by the TDM) to form a composite CDI_{TPM-DEVICE}. This composite CDI_{TPM-DEVICE} may be used to derive channel keys used to protect data shared between the swTPM 530 and the secure storage 560 or other device. Any number of CDI_{TPM-DEVICE} seeds may be generated to scale to the number of TTDs that contain swTPMs.

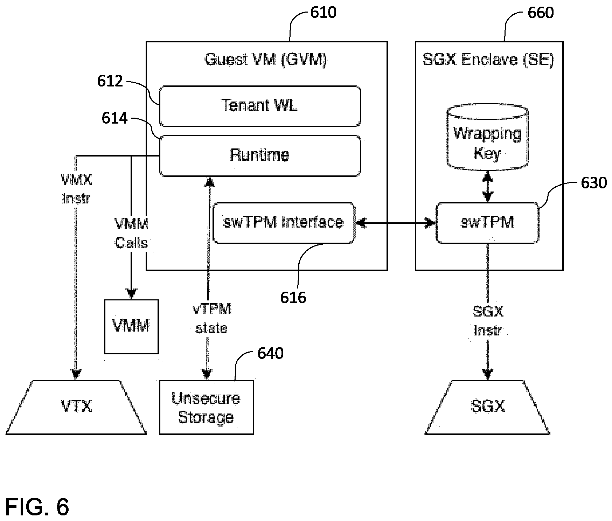

FIG. 6 shows an example of guest VM hardening of swTPM using SGX. In this example, the guest VM 610 hosts a tenant workload (TWL) 612 that may contain a runtime 614 that is binary compatible with a legacy TPM and an SGX enclave 660 is set up and the swTPM 630 is isolated within the enclave 660 integrated with the guest VM 610. The swTPM 630 is exposed to the guest VM 610 via a swTPM interface 616 in the guest VM 610. The swTPM 630 is hardened from vulnerabilities by the SGX enclave boundary.

SGX provides the ability to protect their data from other platform code including software running at higher privilege levels like operating system and the hypervisor. The swTPM 630 may access the secure storage/memory of the guest VM 610 by generating a wrapping key and using the wrapping key to encrypt swTPM contents before storing them on unsecure storage 640 available to the guest VM 610.

Attestation of the swTPM 630 is achieved using SGX attestation capabilities. SGX supports both local and remote attestation, which allows an enclave to prove its identity and the integrity of its code to another party. These SGX attestation capabilities may be used to verify the security status of the swTPM 630.

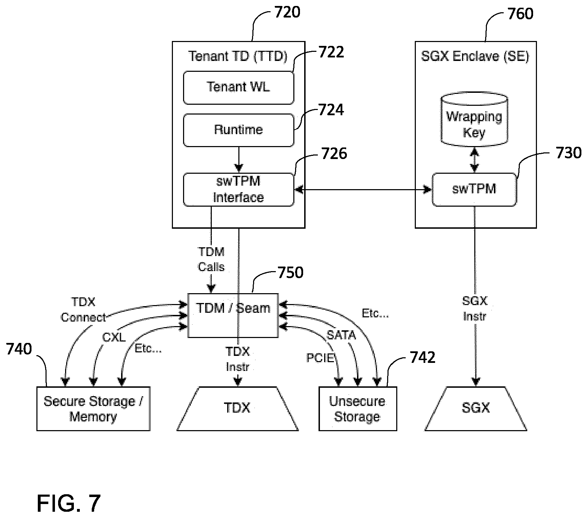

FIG. 7 shows a TD with swTPM protected by SGX in accordance with one example. FIG. 7 shows configuration involving a TDX TTD 720 that hosts a tenant workload (TWL) 722 that may contain a runtime 724 that is binary compatible with a legacy TPM. In this example, an SGX enclave (SE) 760 is set up and the swTPM 730 is isolated within the enclave 760. The swTPM 730 is exposed to the TTD 720 via a swTPM interface 726 in the TTD 720. The swTPM 730 is hardened from TWL/runtime code vulnerabilities by the SE boundary.

Additionally, the enclave 730 may have a key wrapping key that offers added protection of persistent TPM objects that depend on the TTD/TDM for storage. In this configuration either secure storage 740 or unsecure storage 742 may be used. The secure storage 740 option may represent an additional level of protection as well as providing greater assurance toward resiliency, availability, and consistency (as these attributes may be attested as part of their secure connectivity capabilities).

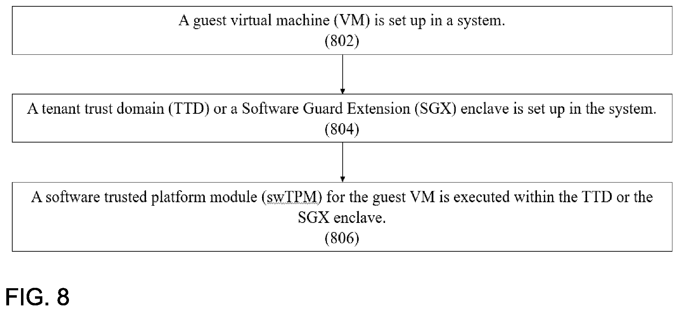

FIG. 8 is a flow diagram of an example process for implementing swTPM for a VM. A guest VM is set up in a system (802). A tenant workload may be deployed in the guest VM. A tenant trust domain (TTD) or a Software Guard Extension (SGX) enclave is set up in the system (804). The TTD is an isolated and secure execution environment created by Trust Domain Extension (TDX), and the SGX enclave is a separated and encrypted region for code and data created by SGX. A swTPM for the guest VM is executed within the TTD or the SGX enclave (806). The swTPM may be exposed to the guest VM via a swTPM interface in the guest VM.

The tenant workload and runtime objects, etc. in the guest VM are measured into the swTPM using the conventional TPM trusted boot/attestation. The measurements of the tenant workload and the guest VM are extended into the TPM PCRs as usual through TSS APIs that are linked to a swTPM interface located within the guest VM. The swTPM interface is a TPM command interface that connects to the TTD containing the swTPM.

TPM requires access to a secure storage to protect non-volatile secrets. In examples, TPM secrets may be stored in a secure storage in the SGX enclave. SGX may be used to implement a secure non-volatile storage where a secure seed is provisioned and used to generate a wrapping key that can be used to wrap the TPM secrets. The SGX enclave may include a key wrapping key that is used to protect non-volatile swTPM objects.

In some examples, the TTD that is set up with the guest VM may take runtime measurements of the tenant workload and the guest VM, and the swTPM in the TTD.

In some examples, the TTD may contain a swTPM boot code that loads, links, or initializes the swTPM in response to a reset signal. The swTPM boot code may signal a trust domain module (TDM) and a quoting trust domain to obtain runtime measurements of the swTPM and the swTPM boot code and verify a security status of the swTPM and the swTPM boot code.

In some examples, nested virtualization may be implemented. The TTD may include an inner VM nested in the TTD and the swTPM may be executed in the inner VM. The inner VM may be provided with a seed value used to generate a key wrapping key that is used to protect non-volatile swTPM objects or secrets.

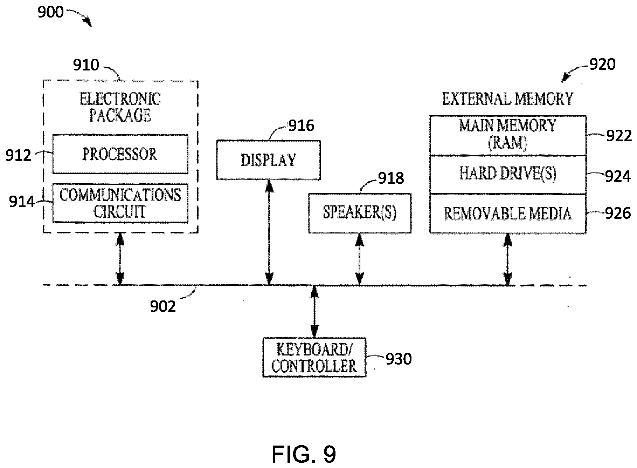

FIG. 9 is a block diagram of an electronic apparatus 900 incorporating at least one electronic assembly and/or method described herein. Electronic apparatus 900 is-merely one example of an electronic apparatus in which forms of the electronic assemblies and/or methods described herein may be used. Examples of an electronic apparatus 900 include, but are not limited to, personal computers, tablet computers, mobile telephones, game devices, MP3 or other digital music players, etc. In this example, electronic apparatus 900 comprises a data processing system that includes a system bus 902 to couple the various components of the electronic apparatus 900. System bus 902 provides communications links among the various components of the electronic apparatus 900 and may be implemented as a single bus, as a combination of busses, or in any other suitable manner.

An electronic assembly 910 as describe herein may be coupled to system bus 902. The electronic assembly 910 may include any circuit or combination of circuits. In one embodiment, the electronic assembly 910 includes a processor 912 which can be of any type. As used herein, "processor" means any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, or any other type of processor or processing circuit.

Other types of circuits that may be included in electronic assembly 910 are a custom circuit, an application-specific integrated circuit (ASIC), or the like, such as, for example, one or more circuits (such as a communications circuit 914) for use in wireless devices like mobile telephones, tablet computers, laptop computers, two-way radios, and similar electronic systems. The IC can perform any other type of function.

The electronic apparatus 900 may also include an external memory 920, which in turn may include one or more memory elements suitable to the particular application, such as a main memory 922 in the form of random access memory (RAM), one or more hard drives 924, and/or one or more drives that handle removable media 926 such as compact disks (CD), flash memory cards, digital video disk (DVD), and the like.

The electronic apparatus 900 may also include a display device 916, one or more speakers 918, and a keyboard and/or controller 930, which can include a mouse, trackball, touch screen, voice-recognition device, or any other device that permits a system user to input information into and receive information from the electronic apparatus 900.

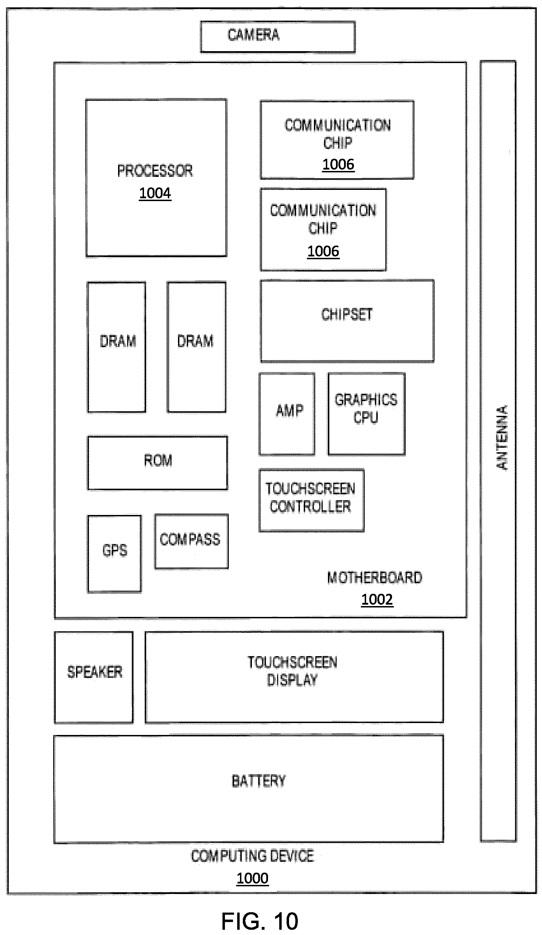

FIG. 10 illustrates a computing device 1000 in accordance with one implementation of the invention. The computing device 1000 houses a board 1002. The board 1002 may include a number of components, including but not limited to a processor 1004 and at least one communication chip 1006. The processor 1004 is physically and electrically coupled to the board 1002. In some implementations the at least one communication chip 1006 is also physically and electrically coupled to the board 1002. In further implementations, the communication chip 1006 is part of the processor 1004. Depending on its applications, computing device 1000 may include other components that may or may not be physically and electrically coupled to the board 1002. These other components include, but are not limited to, volatile memory (e.g., DRAM), non-volatile memory (e.g., ROM), flash memory, a graphics processor, a digital signal processor, a crypto processor, a chipset, an antenna, a display, a touchscreen display, a touchscreen controller, a battery, an audio codec, a video codec, a power amplifier, a global positioning system (GPS) device, a compass, an accelerometer, a gyroscope, a speaker, a camera, and a mass storage device (such as hard disk drive, compact disk (CD), digital versatile disk (DVD), and so forth). The communication chip 1006 enables wireless communications for the transfer of data to and from the computing device 1000. The term "wireless" and its derivatives may be used to describe circuits, devices, systems, methods, techniques, communications channels, etc., that may communicate data through the use of modulated electromagnetic radiation through a non- solid medium. The term does not imply that the associated devices do not contain any wires, although in some embodiments they might not. The communication chip 1006 may implement any of a number of wireless standards or protocols, including but not limited to Wi-Fi (IEEE 802.11 family), WiMAX (IEEE 802.16 family), IEEE 802.20, long term evolution (LTE), Ev-DO, HSPA+, HSDPA+, HSUPA+, EDGE, GSM, GPRS, CDMA, TDMA, DECT, Bluetooth, derivatives thereof, as well as any other wireless protocols that are designated as 3G, 4G, 5G, and beyond. The computing device 1000 may include a plurality of communication chips 1006. For instance, a first communication chip 1006 may be dedicated to shorter range wireless communications such as Wi-Fi and Bluetooth and a second communication chip 1006 may be dedicated to longer range wireless communications such as GPS, EDGE, GPRS, CDMA, WiMAX, LTE, Ev-DO, and others. The processor 1004 of the computing device 1000 includes an integrated circuit die packaged within the processor 1004. In some implementations of the invention, the integrated circuit die of the processor includes one or more devices that are assembled in an ePLB or eWLB based P0P package that that includes a mold layer directly contacting a substrate, in accordance with implementations of the invention. The term "processor" may refer to any device or portion of a device that processes electronic data from registers and/or memory to transform that electronic data into other electronic data that may be stored in registers and/or memory. The communication chip 1006 also includes an integrated circuit die packaged within the communication chip 1006. In accordance with another implementation of the invention, the integrated circuit die of the communication chip includes one or more devices that are assembled in an ePLB or eWLB based P0P package that that includes a mold layer directly contacting a substrate, in accordance with implementations of the invention.

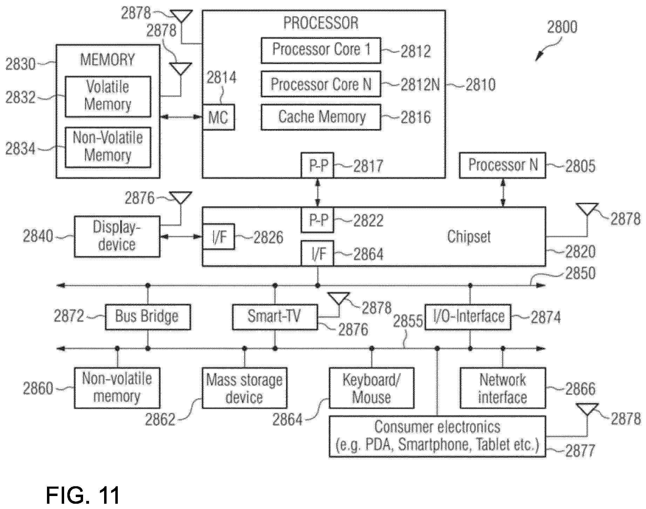

FIG. 11 is included to show an example of a higher-level device application for the disclosed embodiments. The MAA cantilevered heat pipe apparatus embodiments may be found in several parts of a computing system. In an embodiment, the MAA cantilevered heat pipe is part of a communications apparatus such as is affixed to a cellular communications tower. The MAA cantilevered heat pipe may also be referred to as an MAA apparatus. In an embodiment, a computing system 2800 includes, but is not limited to, a desktop computer. In an embodiment, a system 2800 includes, but is not limited to a laptop computer. In an embodiment, a system 2800 includes, but is not limited to a netbook. In an embodiment, a system 2800 includes, but is not limited to a tablet. In an embodiment, a system 2800 includes, but is not limited to a notebook computer. In an embodiment, a system 2800 includes, but is not limited to a personal digital assistant (PDA). In an embodiment, a system 2800 includes, but is not limited to a server. In an embodiment, a system 2800 includes, but is not limited to a workstation. In an embodiment, a system 2800 includes, but is not limited to a cellular telephone. In an embodiment, a system 2800 includes, but is not limited to a mobile computing device. In an embodiment, a system 2800 includes, but is not limited to a smart phone. In an embodiment, a system 2800 includes, but is not limited to an internet appliance. Other types of computing devices may be configured with the microelectronic device that includes MAA apparatus embodiments.

In an embodiment, the processor 2810 has one or more processing cores 2812 and 2812N, where 2812N represents the Nth processor core inside processor 2810 where N is a positive integer. In an embodiment, the electronic device system 2800 using a MAA apparatus embodiment that includes multiple processors including 2810 and 2805, where the processor 2805 has logic similar or identical to the logic of the processor 2810. In an embodiment, the processing core 2812 includes, but is not limited to, pre-fetch logic to fetch instructions, decode logic to decode the instructions, execution logic to execute instructions and the like. In an embodiment, the processor 2810 has a cache memory 2816 to cache at least one of instructions and data for the MAA apparatus in the system 2800. The cache memory 2816 may be organized into a hierarchal structure including one or more levels of cache memory.

In an embodiment, the processor 2810 includes a memory controller 2814, which is operable to perform functions that enable the processor 2810 to access and communicate with memory 2830 that includes at least one of a volatile memory 2832 and a non-volatile memory 2834. In an embodiment, the processor 2810 is coupled with memory 2830 and chipset 2820. The processor 2810 may also be coupled to a wireless antenna 2878 to communicate with any device configured to at least one of transmit and receive wireless signals. In an embodiment, the wireless antenna interface 2878 operates in accordance with, but is not limited to, the IEEE 802.11 standard and its related family, Home Plug AV (HPAV), Ultra Wide Band (UWB), Bluetooth, WiMax, or any form of wireless communication protocol.

In an embodiment, the volatile memory 2832 includes, but is not limited to, Synchronous Dynamic Random Access Memory (SDRAM), Dynamic Random Access Memory (DRAM), RAMBUS Dynamic Random Access Memory (RDRAM), and/or any other type of random access memory device. The non-volatile memory 2834 includes, but is not limited to, flash memory, phase change memory (PCM), read-only memory (ROM), electrically erasable programmable read-only memory (EEPROM), or any other type of non-volatile memory device.

The memory 2830 stores information and instructions to be executed by the processor 2810. In an embodiment, the memory 2830 may also store temporary variables or other intermediate information while the processor 2810 is executing instructions. In the illustrated embodiment, the chipset 2820 connects with processor 2810 via Point-to-Point (PtP or P-P) interfaces 2817 and 2822. Either of these PtP embodiments may be achieved using a MAA apparatus embodiment as set forth in this disclosure. The chipset 2820 enables the processor 2810 to connect to other elements in the MAA apparatus embodiments in a system 2800. In an embodiment, interfaces 2817 and 2822 operate in accordance with a PtP communication protocol such as the Intel^{®} QuickPath Interconnect (QPI) or the like. In other embodiments, a different interconnect may be used.

In an embodiment, the chipset 2820 is operable to communicate with the processor 2810, 2805N, the display device 2840, and other devices 2872, 2876, 2874, 2860, 2862, 2864, 2866, 2877, etc. The chipset 2820 may also be coupled to a wireless antenna 2878 to communicate with any device configured to at least do one of transmit and receive wireless signals.

The chipset 2820 connects to the display device 2840 via the interface 2826. The display 2840 may be, for example, a liquid crystal display (LCD), a plasma display, cathode ray tube (CRT) display, or any other form of visual display device. In and embodiment, the processor 2810 and the chipset 2820 are merged into a MAA apparatus in a system. Additionally, the chipset 2820 connects to one or more buses 2850 and 2855 that interconnect various elements 2874, 2860, 2862, 2864, and 2866. Buses 2850 and 2855 may be interconnected together via a bus bridge 2872 such as at least one MAA apparatus embodiment. In an embodiment, the chipset 2820 couples with a non-volatile memory 2860, a mass storage device(s) 2862, a keyboard/mouse 2864, and a network interface 2866 by way of at least one of the interface 2824 and 2874, the smart TV 2876, and the consumer electronics 2877, etc.

In an embodiment, the mass storage device 2862 includes, but is not limited to, a solid state drive, a hard disk drive, a universal serial bus flash memory drive, or any other form of computer data storage medium. In one embodiment, the network interface 2866 is implemented by any type of well-known network interface standard including, but not limited to, an Ethernet interface, a universal serial bus (USB) interface, a Peripheral Component Interconnect (PCI) Express interface, a wireless interface and/or any other suitable type of interface. In one embodiment, the wireless interface operates in accordance with, but is not limited to, the IEEE 802.11 standard and its related family, Home Plug AV (HPAV), Ultra Wide Band (UWB), Bluetooth, WiMax, or any form of wireless communication protocol.

While the modules shown in FIG. 11 are depicted as separate blocks within the MAA apparatus embodiment in a computing system 2800, the functions performed by some of these blocks may be integrated within a single semiconductor circuit or may be implemented using two or more separate integrated circuits. For example, although cache memory 2816 is depicted as a separate block within processor 2810, cache memory 2816 (or selected aspects of 2816) can be incorporated into the processor core 2812.

Where useful, the computing system 2800 may have a broadcasting structure interface such as for affixing the MAA apparatus to a cellular tower.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions or computer program products as well as any data created and/or used during implementation of the disclosed technologies can be stored on one or more tangible or non-transitory computer-readable storage media, such as volatile memory (e.g., DRAM, SRAM), non-volatile memory (e.g., flash memory, chalcogenide-based phase-change non-volatile memory) optical media discs (e.g., DVDs, CDs), and magnetic storage (e.g., magnetic tape storage, hard disk drives). Computer-readable storage media can be contained in computer-readable storage devices such as solid-state drives, USB flash drives, and memory modules. Alternatively, any of the methods disclosed herein (or a portion) thereof may be performed by hardware components comprising non-programmable circuitry. In some examples, any of the methods herein can be performed by a combination of non-programmable hardware components and one or more processing units executing computer-executable instructions stored on computer-readable storage media.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

As used in this application and the claims, a list of items joined by the term "and/or" can mean any combination of the listed items. For example, the phrase "A, B and/or C" can mean A; B; C; A and B; A and C; B and C; or A, B and C. As used in this application and the claims, a list of items joined by the term "at least one of" can mean any combination of the listed terms. For example, the phrase "at least one of A, B or C" can mean A; B; C; A and B; A and C; B and C; or A, B, and C. Moreover, as used in this application and the claims, a list of items joined by the term "one or more of' can mean any combination of the listed terms. For example, the phrase "one or more of A, B and C" can mean A; B; C; A and B; A and C; B and C; or A, B, and C.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

Although the operations of some of the disclosed methods are described in a particular, sequential order for convenient presentation, it is to be understood that this manner of description encompasses rearrangement, unless a particular ordering is required by specific language set forth herein. For example, operations described sequentially may in some cases be rearranged or performed concurrently. Moreover, for the sake of simplicity, the attached figures may not show the various ways in which the disclosed methods can be used in conjunction with other methods.

Another example is a computer program having a program code for performing at least one of the methods described herein, when the computer program is executed on a computer, a processor, or a programmable hardware component. Another example is a machine-readable storage including machine readable instructions, when executed, to implement a method or realize an apparatus as described herein. A further example is a machine-readable medium including code, when executed, to cause a machine to perform any of the methods described herein.

The examples as described herein may be summarized as follows:
An example (e.g., example 1) relates to a method for implementing swTPM for a VM. The method includes setting up a guest VM, setting up a TTD or a SGX enclave, wherein the TTD is an isolated and secure execution environment created by TDX, and the SGX enclave is a separated and encrypted region for code and data created by SGX, and executing a swTPM for the guest VM within the TTD or the SGX enclave.
Another example, (e.g., example 2) relates to a previously described example (e.g., example 1), wherein a tenant workload deployed in the guest VM is measured and the measurements are extended into PCRs in the swTPM via a swTPM interface in the guest VM.
Another example, (e.g., example 3) relates to a previously described example (e.g., any one of examples 1-2), further comprising storing TPM secrets in a secure storage in the SGX enclave.
Another example, (e.g., example 4) relates to a previously described example (e.g., any one of examples 1-3), wherein the TTD takes runtime measurements of a tenant workload and/or a workload boot code in the guest VM and/or the swTPM and generates a TD report based on the runtime measurements.
Another example, (e.g., example 5) relates to a previously described example (e.g., any one of examples 1-4), wherein the TTD contains a swTPM boot code that loads, links, or initializes the swTPM in response to a reset signal, and signals a TDM and a quoting trust domain to obtain runtime measurements of the swTPM and the swTPM boot code and verify a security status of the swTPM and the swTPM boot code.
Another example, (e.g., example 6) relates to a previously described example (e.g., any one of examples 1-5), wherein the TTD includes an inner VM nested in the TTD and the swTPM is executed in the inner VM.
Another example, (e.g., example 7) relates to a previously described example (e.g., example 6), wherein the inner VM is provided with a seed value used to generate a key wrapping key that is used to protect non-volatile swTPM objects.
Another example, (e.g., example 8) relates to a previously described example (e.g., any one of examples 1-7), wherein a tenant workload is deployed in the TTD and the swTPM is executed in the SGX enclave, and the swTPM is exposed to the TTD via a swTPM interface in the TTD.
Another example, (e.g., example 9) relates to a previously described example (e.g., any one of examples 1-8), wherein the SGX enclave includes a key wrapping key that is used to protect non-volatile swTPM objects.
Another example, (e.g., example 10) relates to a system for implementing swTPM for a VM. The system comprises a processor and a storage. The system is configured to support creation and operation of one or more VMs, and configured to set up a guest VM, set up a TTD or a SGX enclave, wherein the TTD is an isolated and secure execution environment created by TDX and the SGX enclave is a separated and encrypted region for code and data created by SGX, and execute a swTPM for the guest VM within the TTD or the SGX enclave.
Another example, (e.g., example 11 relates to a previously described example (e.g., example 10), wherein the guest VM is configured to measure a tenant workload deployed in the guest VM and extend the measurements into PCRs in the swTPM via a swTPM interface in the guest VM.
Another example, (e.g., example 12) relates to a previously described example (e.g., any one of examples 10-11), wherein TPM secrets are stored in a secure storage in the SGX enclave.
Another example, (e.g., example 13) relates to a previously described example (e.g., any one of examples 10-12), wherein the TTD is configured to take runtime measurements of a tenant workload and/or a workload boot code in the guest VM and/or the swTPM and generate a TD report based on the runtime measurements.
Another example, (e.g., example 14) relates to a previously described example (e.g., any one of examples 10-13), wherein the TTD contains a swTPM boot code that is configured to load, link, or initialize the swTPM in response to a reset signal, and signal a TDM and a quoting trust domain to obtain runtime measurements of the swTPM and the swTPM boot code and verify a security status of the swTPM and the swTPM boot code.
Another example, (e.g., example 15) relates to a previously described example (e.g., any one of examples 10-14), wherein the TTD includes an inner VM nested in the TTD and the swTPM is executed in the inner VM.
Another example, (e.g., example 16) relates to a previously described example (e.g., example 15), wherein the inner VM is provided with a seed value used to generate a key wrapping key that is used to protect non-volatile swTPM objects.
Another example, (e.g., example 17) relates to a previously described example (e.g., any one of examples 10-16), wherein a tenant workload is deployed in the TTD and the swTPM is executed in the SGX enclave, and the swTPM is exposed to the TTD via a swTPM interface in the TTD.
Another example, (e.g., example 18) relates to a previously described example (e.g., any one of examples 10-17), wherein the SGX enclave includes a key wrapping key that is used to protect non-volatile swTPM objects.
Another example, (e.g., example 19) relates to a non-transitory machine-readable medium including code, when executed, to cause a machine to perform the method of as in any one of examples 1-9.

The aspects and features mentioned and described together with one or more of the previously detailed examples and figures, may as well be combined with one or more of the other examples in order to replace a like feature of the other example or in order to additionally introduce the feature to the other example.

Examples may further be or relate to a computer program having a program code for performing one or more of the above methods, when the computer program is executed on a computer or processor. Steps, operations or processes of various above-described methods may be performed by programmed computers or processors. Examples may also cover program storage devices such as digital data storage media, which are machine, processor or computer readable and encode machine-executable, processor-executable or computer-executable programs of instructions. The instructions perform or cause performing some or all of the acts of the above-described methods. The program storage devices may comprise or be, for instance, digital memories, magnetic storage media such as magnetic disks and magnetic tapes, hard drives, or optically readable digital data storage media. Further examples may also cover computers, processors or control units programmed to perform the acts of the above-described methods or (field) programmable logic arrays ((F)PLAs) or (field) programmable gate arrays ((F)PGAs), programmed to perform the acts of the above-described methods.

The description and drawings merely illustrate the principles of the disclosure. Furthermore, all examples recited herein are principally intended expressly to be only for pedagogical purposes to aid the reader in understanding the principles of the disclosure and the concepts contributed by the inventor(s) to furthering the art. All statements herein reciting principles, aspects, and examples of the disclosure, as well as specific examples thereof, are intended to encompass equivalents thereof.

A functional block denoted as "means for ..." performing a certain function may refer to a circuit that is configured to perform a certain function. Hence, a "means for s.th." may be implemented as a "means configured to or suited for s.th.", such as a device or a circuit configured to or suited for the respective task.

Functions of various elements shown in the figures, including any functional blocks labeled as "means", "means for providing a sensor signal", "means for generating a transmit signal.", etc., may be implemented in the form of dedicated hardware, such as "a signal provider", "a signal processing unit", "a processor", "a controller", etc. as well as hardware capable of executing software in association with appropriate software. When provided by a processor, the functions may be provided by a single dedicated processor, by a single shared processor, or by a plurality of individual processors, some of which or all of which may be shared. However, the term "processor" or "controller" is by far not limited to hardware exclusively capable of executing software but may include digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

A block diagram may, for instance, illustrate a high-level circuit diagram implementing the principles of the disclosure. Similarly, a flow chart, a flow diagram, a state transition diagram, a pseudo code, and the like may represent various processes, operations or steps, which may, for instance, be substantially represented in computer readable medium and so executed by a computer or processor, whether or not such computer or processor is explicitly shown. Methods disclosed in the specification or in the claims may be implemented by a device having means for performing each of the respective acts of these methods.

It is to be understood that the disclosure of multiple acts, processes, operations, steps or functions disclosed in the specification or claims may not be construed as to be within the specific order, unless explicitly or implicitly stated otherwise, for instance for technical reasons. Therefore, the disclosure of multiple acts or functions will not limit these to a particular order unless such acts or functions are not interchangeable for technical reasons. Furthermore, in some examples a single act, function, process, operation or step may include or may be broken into multiple sub-acts, -functions, -processes, -operations or -steps, respectively. Such sub acts may be included and part of the disclosure of this single act unless explicitly excluded.

Furthermore, the following claims are hereby incorporated into the detailed description, where each claim may stand on its own as a separate example. While each claim may stand on its own as a separate example, it is to be noted that - although a dependent claim may refer in the claims to a specific combination with one or more other claims - other examples may also include a combination of the dependent claim with the subject matter of each other dependent or independent claim. Such combinations are explicitly proposed herein unless it is stated that a specific combination is not intended. Furthermore, it is intended to include also features of a claim to any other independent claim even if this claim is not directly made dependent to the independent claim.

## Claims

1. A method for implementing software trusted platform module, swTPM, for a virtual machine, VM, comprising:
setting up (802) a guest VM;
setting up (804) a tenant trust domain, TTD, or a Software Guard Extension, SGX, enclave, wherein the TTD is an isolated and secure execution environment created by Trust Domain Extension, TDX, and the SGX enclave is a separated and encrypted region for code and data created by SGX; and
executing (806) a swTPM for the guest VM within the TTD or the SGX enclave.

2. The method of claim 1, wherein a tenant workload deployed in the guest VM is measured and the measurements are extended into Platform Configuration Registers, PCRs, in the swTPM via a swTPM interface in the guest VM.

3. The method as in any one of claims 1-2, further comprising:
storing TPM secrets in a secure storage in the SGX enclave.

4. The method as in any one of claims 1-3, wherein the TTD takes runtime measurements of a tenant workload and/or a workload boot code in the guest VM and/or the swTPM and generates a TD report based on the runtime measurements.

5. The method as in any one of claims 1-4, wherein the TTD contains a swTPM boot code that loads, links, or initializes the swTPM in response to a reset signal, and signals a trust domain module, TDM, and a quoting trust domain to obtain runtime measurements of the swTPM and the swTPM boot code and verify a security status of the swTPM and the swTPM boot code.

6. The method as in any one of claims 1-5, wherein the TTD includes an inner VM nested in the TTD and the swTPM is executed in the inner VM.

7. The method as in any one of claims 1-6, wherein a tenant workload is deployed in the TTD and the swTPM is executed in the SGX enclave, and the swTPM is exposed to the TTD via a swTPM interface in the TTD.

8. A system for implementing software trusted platform module, swTPM, for a virtual machine, VM, wherein the system comprises a processor (102) and a storage (104),
wherein the system is configured to support creation and operation of one or more VMs, and configured to:
set up a guest VM;
set up a tenant trust domain, TTD, or a Software Guard Extension, SGX, enclave, wherein the TTD is an isolated and secure execution environment created by Trust Domain Extension, TDX, and the SGX enclave is a separated and encrypted region for code and data created by SGX; and
execute a swTPM for the guest VM within the TTD or the SGX enclave.

9. The system of claim 8, wherein the guest VM is configured to measure a tenant workload deployed in the guest VM and extend the measurements into Platform Configuration Registers, PCRs, in the swTPM via a swTPM interface in the guest VM.

10. The system as in any one of claims 8-9, wherein TPM secrets are stored in a secure storage in the SGX enclave.

11. The system as in any one of claims 8-10, wherein the TTD is configured to take runtime measurements of a tenant workload and/or a workload boot code in the guest VM and/or the swTPM and generate a TD report based on the runtime measurements.

12. The system as in any one of claims 8-11, wherein the TTD contains a swTPM boot code that is configured to load, link, or initialize the swTPM in response to a reset signal, and signal a trust domain module, TDM, and a quoting trust domain to obtain runtime measurements of the swTPM and the swTPM boot code and verify a security status of the swTPM and the swTPM boot code.

13. The system as in any one of claims 8-12, wherein the TTD includes an inner VM nested in the TTD and the swTPM is executed in the inner VM.

14. The system as in any one of claims 8-13, wherein a tenant workload is deployed in the TTD and the swTPM is executed in the SGX enclave, and the swTPM is exposed to the TTD via a swTPM interface in the TTD.

15. A non-transitory machine-readable medium including code, when executed, to cause a machine to perform the method as in any one of claims 1-7.
